# EUROPEAN PATENT SPECIFICATION

(11) **EP 0 705 161 B1**
(45) Date of publication and mention of the grant of the patent: **23.04.1997**
(21) Application number: 94919626.5
(22) Date of filing: 13.06.1994
(51) Int. Cl.: B29C 41/20, H01B 19/00, H01B 17/26

(54) **PROCESS FOR THE MANUFACTURE OF SUBSTANTIALLY HOLLOW-CYLINDRICAL CASTINGS, AND A SUBSTANTIALLY HOLLOW-CYLINDRICAL CASTING**
VERFAHREN ZUR HERSTELLUNG VON IM WESENTLICHEN HOHLZYLINDERFÖRMIGEN GIESSLINGEN UND IM WESENTLICHEN HOHLZYLINDERFÖRMIGER GIESSLING
PROCEDE DE PRODUCTION DE PIECES MOULEES SENSIBLEMENT CYLINDRIQUES ET CREUSES, ET PIECE MOULEE SENSIBLEMENT CYLINDRIQUE ET CREUSE

(30) Priority: 25.06.1993 EP 93810457
(43) Date of publication of application: 10.04.1996
(73) Proprietor: Ciba Specialty Chemicals Holding Inc., 4057 Basel (CH)
(72) Inventor: AUS DER AU, Hans-Rudolf, CH-4310 Rheinfelden (CH); LUCCHI, Marco, CH-4123 Allschwil (CH); VOIROL, Peter, CH-4104 Oberwil (CH); SANER, Niklaus, CH-4423 Hersberg (CH)
(86) International application number: EP9401912
(87) International publication number: WO9500310

(56) References cited:
- EP-A- 0 046 822
- CA-A- 737 835
- CH-A- 424 886
- CH-A- 448 196
- DE-A- 1 926 204
- DE-A- 2 042 179
- DE-A- 2 046 774
- DE-A- 2 637 683
- DE-A- 2 901 528
- DE-B- 2 626 855
- DE-U- 1 819 376
- DE-U- 1 993 573
- FR-A- 1 085 849
- FR-A- 2 394 874

## Description

The invention relates to a process for the manufacture of substantially hollow-cylindrical castings and to a substantially hollow-cylindrical casting according to the preamble of the respective independent claim.

Hollow-cylindrical castings are known in various forms and are used, inter alia, in high-voltage engineering. A current use of such castings is as leading-in insulators, for example in large transformers in power station engineering. In the case of such transformers, several connections or cables that are under high voltage and the electrical potential of which differs greatly are led outwards out of the transformer in order to convey the energy generated in the power station to the consumer via high-voltage lines (overhead lines, overland lines). Because the connections or cables led out of the transformer are, as already established, under high voltage, the small distance between those connections or cables and either the earthed transformer housing or the adjacent connection or cable, and the large potential difference present, may give rise to flash-over (arcing). The connections or cables are therefore led in insulated manner at least sufficiently far out of the transformer and away from the transformer housing and also away from one another that such a flash-over can no longer take place, since such flash-overs represent a considerable risk to operating safety and may even have fatal results for personnel in the vicinity.

The leading-in insulators used today are manufactured, for example, from porcelain and are filled with sulfur hexafluoride gas (SF₆ gas), for example at an operating pressure of approximately from 4000 to 8000 hPa. Such porcelain insulators exhibit good weathering resistance and a good creep resistance, but have the disadvantage that they may exhibit a dangerous bursting behaviour under too high a mechanical stress since the porcelain shell may burst in the manner of an explosion owing to the porcelain's high degree of brittleness. That may have extremely serious consequences, especially as the individual pieces of burst porcelain are then, as a rule, thrown outwards in the manner of an explosion and can damage other, especially adjacent, insulators, so that a kind of "chain reaction" may occur, to say nothing of the danger to personnel in the immediate vicinity. Therefore, if they become defective, such insulators constitute a considerable safety risk.

Another current leading-in insulator has substantially the same structure as the insulator just described. In addition to the porcelain shell, however, a glass-fibre-reinforced epoxy resin tube is provided as an internal tube in the external tube defined by the porcelain shell. That internal tube is filled with SF₆ gas. The internal tube can absorb mechanical stresses. A pressure-resistant chamber is provided between the internal tube and the porcelain shell so that the porcelain shell is relieved of the operating pressure. The porcelain shell ensures good weathering resistance and creep resistance. Such insulators are, per se, very suitable for the purposes for which they are used but have the disadvantage that their structure is complicated and, accordingly, the manufacturing processes are also correspondingly complicated. As a result, such insulators are also correspondingly expensive. Furthermore, if the internal tube of such insulators becomes defective (for example in the case of a flash-over), there is still the risk that the porcelain outer shell will then burst, and the burst pieces of porcelain may be thrown outwards with the potentially serious consequences already mentioned above.

Hollow-cylindrical castings are also known, for example, from DE-A-26 37 683, which document has been taken for the delimitation of the independent claims. The castings described there are manufactured by introducing a liquid casting material into a rotationally driven casting mould. Prior to introducing the casting material into the casting mould, a hollow-cylindrical mesh fabric, which serves as a reinforcement layer, is concentrically arranged in the mould and forms part of the manufactured casting.

Also known in the field of high-voltage engineering are support insulators which are manufactured, for example, from several epoxy resin systems having different properties. Processes for the manufacture of such insulators can be quite uncomplicated. Such an uncomplicated process is described, for example, in CH-A-419 272. There, the epoxy resin is introduced into a hollow-cylindrical casting mould that has previously been heated to a temperature above the gelling temperature of the epoxy resin systems, the casting mould being driven in rotation. During the rotating operation, the axis of rotation of the casting mould extends horizontally. The centrifugal force causes the casting material to be pressed against the internal wall of the mould, and a hollow-cylindrical casting (shell) is formed. Before the hollow-cylindrical casting has been cured, a further casting material (for example an epoxy resin system having different properties) is introduced by placing the casting mould in a vertical position and introducing the other casting material (core) (for example in a free jet or controlled by a funnel). It is thus possible to manufacture support insulators that can withstand mechanical stress and are also resistant to creep and weathering.

Although the process, as described in CH-A-419 272, is used for the manufacture of support insulators that form a solid cylindrical body at the end of the manufacturing process, it is in principle also suitable for the manufacture of hollow-cylindrical insulators. That is also clear from CH-A-419 272 because, in the described manufacture of the solid cylindrical insulator, a hollow-cylindrical casting is produced first (into which further casting material is then introduced). If, then, a hollow-cylindrical insulator is manufactured in accordance with the casting process described, it will exhibit good weathering resistance and also a high degree of creep resistance. The disadvantage is, however, that such hollow-cylindrical insulators manufactured from epoxy resin systems and filled with SF₆ gas may, also, burst into many individual pieces when under too great a stress, which may have the serious consequences already mentioned above.

The problem of the invention is accordingly to provide as uncomplicated an insulator as possible and as uncomplicated a process as possible for the manufacture of an insulator that exhibits a high degree of weathering resistance and a high degree of creep resistance and that, on the other hand, if it becomes defective, exhibits a bursting behaviour that constitutes as low a safety risk as possible.

The problem relating to the manufacturing process is solved in that, first, a hollow-cylindrical mesh fabric is introduced into the heated casting mould concentrically to the axis of rotation thereof, and only when the mesh fabric has been introduced is the casting material introduced into the casting mould. The temperature to which the casting mould is heated is above the gelling temperature of the casting material and the introduced hollow-cylindrical mesh fabric exhibits a degree of resilience that is lower than or approximately equal to that of the casting. As a result, the bursting behaviour of the casting so manufactured is such that the casting only cracks if it becomes defective and burst pieces are not thrown outwards, whereby safety is clearly enhanced. The manufacturing process is simple and reliable and enables an insulator to be manufactured that exhibits a high degree of weathering resistance and a high degree of creep resistance and that, on the other hand, if it becomes defective, exhibits a bursting behaviour that ensures a high degree of safety, especially when the casting is used as a SF₆ leading-in insulator in high-voltage engineering.

In one form of the process, at least two mesh fabrics having different diameters are introduced into the casting mould concentrically to the axis of rotation thereof before the casting material is introduced. As a result, the bursting behaviour can be further improved, depending on the wall thickness of the casting, and safety can accordingly be further enhanced.

Ideally, a fabric exhibiting approximately the same degree of resilience as does the casting is introduced as the mesh fabric into the casting mould, so that the resilient properties of the mesh fabric and of the cured casting material of the casting are substantially the same, and, owing to its ability to withstand mechanical stress, the casting together with the inserted mesh fabric exhibits approximately the same behaviour as does a casting without such an inserted mesh fabric but, on the other hand, it has a substantially better bursting behaviour, as already mentioned above.

A polyester fabric is especially suitable as such a mesh fabric. That polyester fabric (for example a Diolen fabric) may, for example, be impregnated with a laminating resin before being introduced into the casting mould. The laminating resin exhibits a heat resistance that is above the temperature of the casting mould. A substance mixture of an epoxy resin, a hardener and an accelerator is used as an especially suitable laminating resin. A liquid epoxy resin of bisphenol A may be used as the epoxy resin, methyl-tetrahydrophthalic acid anhydride may be used as the hardener and 1-methyl-imidazole may be used as the accelerator in a ratio by weight of approximately 100 parts epoxy resin: 90 parts hardener: 1 part accelerator.

In an advantageous form of the process, a substance mixture that comprises an epoxy resin, a hardener, an accelerator, a filler and a thixotropic agent is used as the casting material. Hexahydrophthalic acid diglycidyl ester may be used as the epoxy resin, hexahydrophthalic acid anhydride may be used as the hardener, a mixture of 90 parts by weight of a solution of 3680 parts of sodium methanolate in 8600 parts of methanol and 87 720 parts of polypropylene glycol and 10 parts by weight of 1-methyl-imidazole may be used as the accelerator, a silanised quartz powder, such as the reaction product of trimethoxy3-(oxiranylmethoxy)propyl-silane and quartz, may be used as the filler, and silicon dioxide in the form of Aerosil® 200 may be used as the thixotropic agent in a ratio by weight of approximately 100 parts epoxy resin : 90 parts hardener: 2.4 parts accelerator: 370 parts silanised quartz powder: 1.5 parts thixotropic agent.

With regard to the insulator, the problem is solved by a substantially hollow-cylindrical casting wherein a mesh fabric is embedded in the casting concentrically to the axis of the cylinder. The embedded mesh fabric exhibits a degree of resilience that is lower than or approximately equal to that of the casting. The bursting behaviour of a casting manufactured in that manner is such that, if the casting becomes defective, it only cracks, and burst pieces are not thrown outwards,whereby safety is clearly enhanced. The casting exhibits a high degree of weathering resistance and a high degree of creep resistance and, if it becomes defective, exhibits the above-mentioned bursting behaviour, whereby safety is considerably enhanced, especially when the casting is used as a SF₆ leading-in insulator in high-voltage engineering.

An advantageous development of the casting is distinguished by the fact that at least two mesh fabrics having different diameters are embedded in that casting concentrically to the axis of the cylinder. As a result, the bursting behaviour can be further improved, depending on the wall thickness of the casting, and safety can therefore be enhanced even further.

Ideally, the mesh fabric exhibits approximately the same degree of resilience as does the casting, so that the resilient properties of the mesh fabric and of the cured casting material of the casting are substantially the same, and, owing to its ability to withstand mechanical stress, the casting together with the inserted mesh fabric therefore exhibits approximately the same behaviour as does a casting without such an inserted mesh fabric but, on the other hand, it has a substantially better bursting behaviour, as already mentioned above.

Castings wherein the embedded mesh fabric is a polyester fabric (for example a Diolen fabric) are especially advantageous. The polyester fabric may be impregnated with a laminating resin. The laminating resin exhibits a heat resistance that is above the temperature of the casting mould. A substance mixture that comprises an epoxy resin, a hardener and an accelerator is an especially suitable laminating resin. A liquid epoxy resin of bisphenol A may be used as the epoxy resin, methyl-tetrahydrophthalic acid anhydride may be used as the hardener and 1-methyl-imidazole may be used as the accelerator in a ratio by weight of approximately 100 parts epoxy resin : 90 parts hardener: 1 part accelerator.

With regard to the casting material, especially advantageous castings are those wherein the casting material is a substance mixture that comprises an epoxy resin, a hardener, an accelerator, a filler and a thixotropic agent. The epoxy resin may be hexahydrophthalic acid diglycidyl ester, the hardener may be hexahydrophthalic acid anhydride, the accelerator may be a mixture of 90 parts by weight of a solution of 3680 parts of sodium methanolate in 8600 parts of methanol and 87 720 parts of polypropylene glycol and 10 parts by weight of 1-methyl-imidazole, the filler may be a silanised quartz powder, such as the reaction product of trimethoxy-3-(oxiranylmethoxy)propyl-silane and quartz, and the thixotropic agent may be silicon dioxide in the form of Aerosil® 200 in a ratio by weight of approximately 100 parts epoxy resin : 90 parts hardener: 2.4 parts accelerator: 370 parts silanised quartz powder: 1.5 parts thixotropic agent.

The invention is explained in more detail in the following with reference to the drawings. Shown in diagrammatic form are:
- Fig. 1: a variant of the process according to the invention in a flow diagram,
- Fig. 2: an enlarged view of a process step of the flow diagram of Fig. 1,
- Fig. 3: an enlarged view of the process step following the process step of Fig. 2,
- Fig. 4: an embodiment of a hollow-cylindrical casting mould having two closing flanges,
- Fig. 5: an embodiment of a casting according to the invention manufactured using a casting mould according to Fig. 4,
- Fig. 6: a further embodiment of a hollow-cylindrical casting mould with one closing flange,
- Fig. 7: a further embodiment of a casting according to the invention manufactured using a casting mould according to Fig. 6
and
- Fig. 8: cut-out portions of a casting having one embedded mesh fabric, of a casting having two embedded mesh fabrics and of a casting having three embedded mesh fabrics.

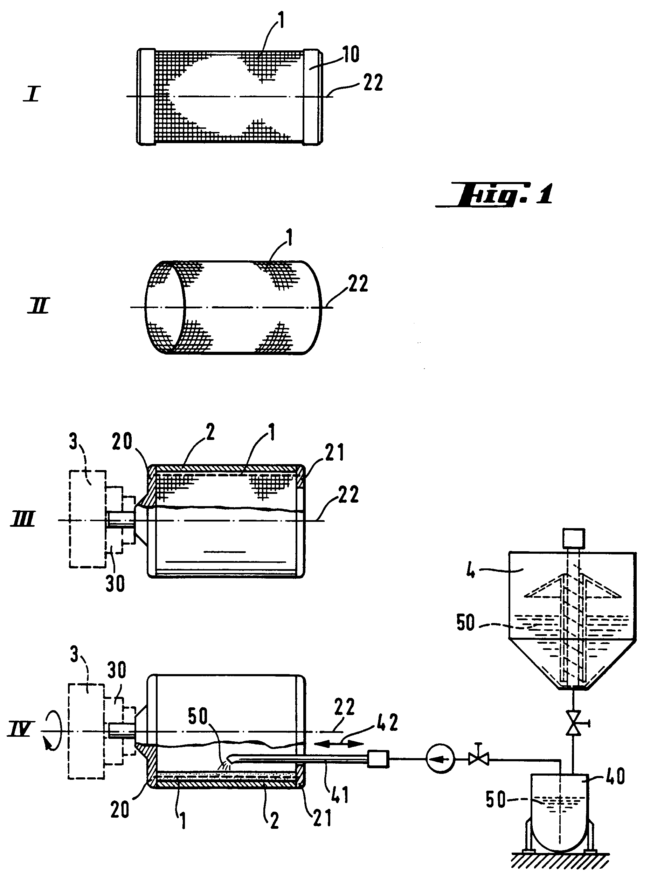

A variant of the process according to the invention is shown in Fig. 1 (steps I,II,III,IV). In a first step, a cylindrical mesh fabric 1 is first formed by winding the mesh fabric 1 round a winding body 10. The cylindrical mesh fabric 1 is then removed from the winding body 10 - such a cylindrical mesh fabric 1 removed from the winding body is shown in the second step of Fig. 1.

In the next step the cylindrical mesh fabric 1 is inserted into a hollow-cylindrical mould 2. The mould 2 with the inserted mesh fabric 1 is connected to a drive device 3 that can drive the mould 2 in rotation about its longitudinal axis 22. In the next process step, a more or less liquid casting material 50, the main supply of which is stored in a large supply container 4, is introduced by means of a pouring lance 41 from an intermediate container 40 arranged in the vicinity of the casting mould 2 into that mould 2 in which the inserted mesh fabric 1 is located. As the casting material 50 is being introduced, the mould 2 is rotated by means of the drive device 3.

Fig. 2 shows once again, on an enlarged scale, the process step in which the mesh fabric 1 is inserted into the mould 2 (upper half in sectional view). That view shows clearly that the casting mould 2 is connected at its two ends to flanges 20 and 21, the flange 20 being provided with a spindle-like projection 201 which can be introduced into a correspondingly shaped receiving portion 30 of the drive device 3. The receiving portion 30 may, for example, be in the form of a chuck similar to the chuck of a lathe.

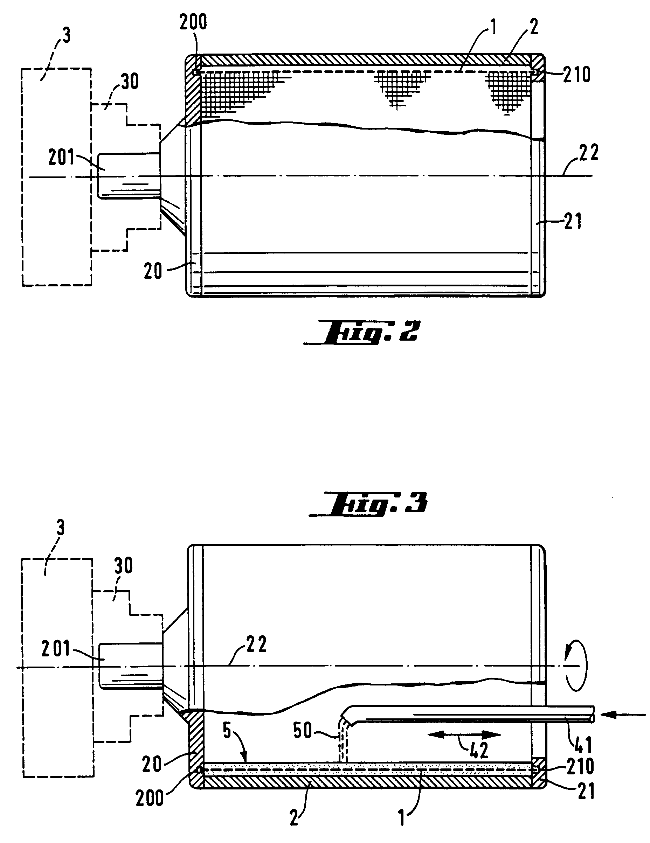

Fig. 3 shows on an enlarged scale (lower half in sectional view) the process step in which the casting material 50 is introduced into the casting mould 2. The flange 20 at the end of the casting mould facing the drive device 3 completely closes off the casting mould at that end. The flange 21, on the other hand, does not close off the casting mould 2 completely because the pouring lance 41 for introducing the casting material into the mould 2 is introduced into the interior of the mould 2 from that end and is removed again from the interior of the mould from that end when the introduction of the casting material is complete, as indicated by the arrows 42. As the casting material 50 is being introduced, the mould 2 is rotated about its longitudinal axis 22 by means of the drive device 3. Before the introduction of the casting material, the casting mould 2 has already been heated to a temperature above the gelling temperature of the casting material 50, so that the casting material gradually gels as a result of contact with the mould 2 and, thus, a substantially hollow-cylindrical casting 5 is formed in which the mesh fabric 1 is embedded.

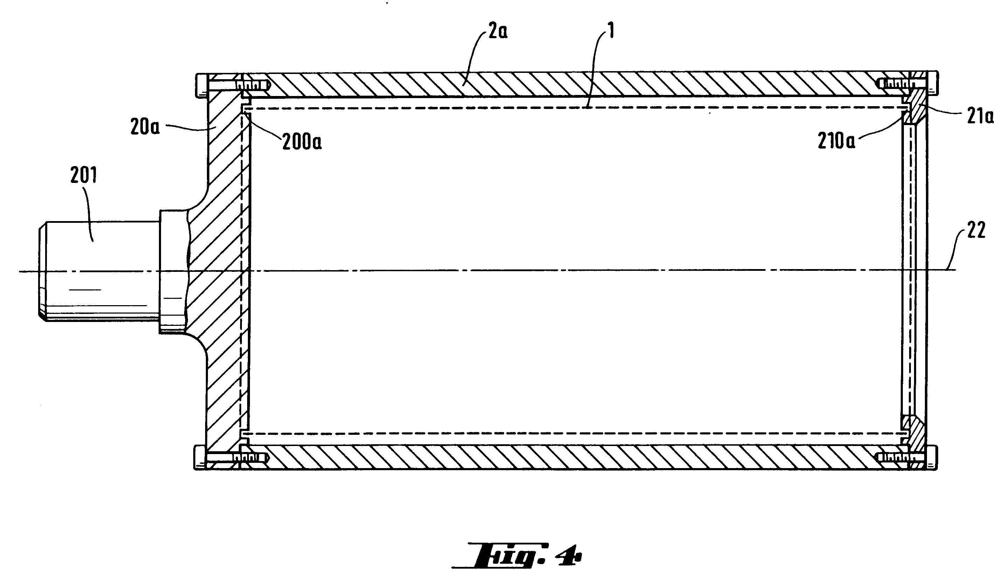

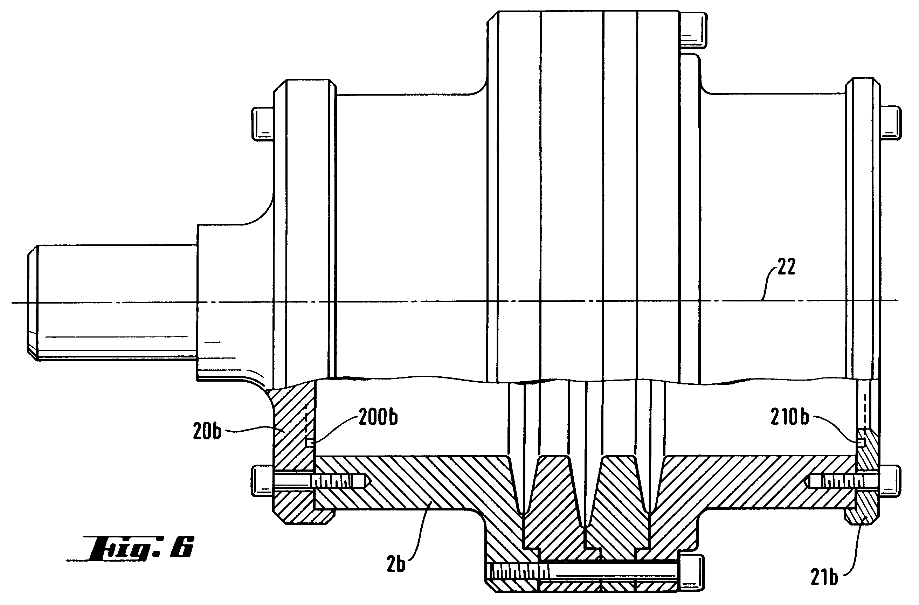

Fig. 2 and Fig. 3 already show that grooves 200 and 210 are provided that run all the way round the flanges 20 and 21, respectively, which are connected to the mould 2. The mesh fabric 1 can be inserted into those grooves so that the position of the mesh fabric 1 relative to the mould 2 remains unchanged during the manufacture of the casting 5. The grooves 200 and 210 are, however, shown even more clearly in Fig. 4 and Fig. 6 in which an embodiment 2a and 2b, respectively, of a casting mould is shown.

In Fig. 4, the casting mould 2a is connected to two flanges 20a and 21a in which are provided the grooves 200a and 210a, respectively, into which the mesh fabric 1 can be inserted. By means of that embodiment of the casting mould, it is possible to manufacture hollow-cylindrical castings 5a having exactly one embedded mesh fabric. If a corresponding number of grooves are provided concentrically to one another in the flanges, it is also possible to manufacture castings having several embedded mesh fabrics. That possibility is discussed further hereinafter in a separate section.

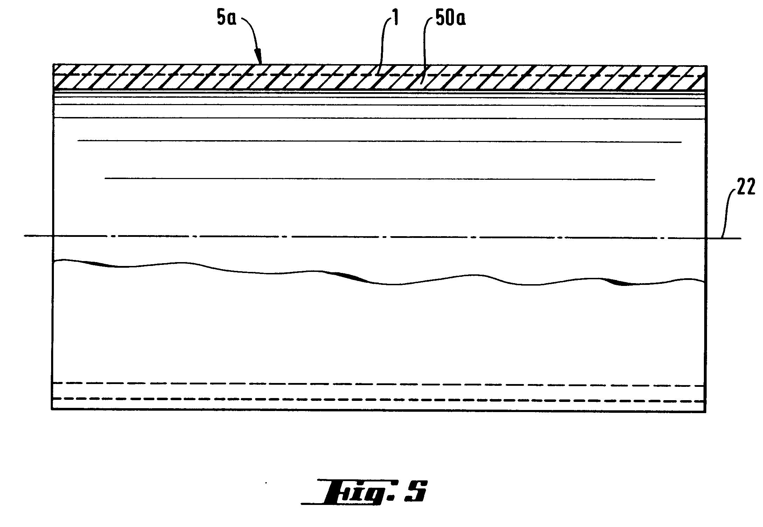

A casting 5a having exactly one mesh fabric 1 embedded in the casting material 50a is shown in Fig. 5 (upper half in sectional view). Such a casting 5a can be manufactured by means of the casting mould 2a shown in Fig. 4 in accordance with the process described with reference to Fig. 1, Fig. 2 and Fig. 3.

Fig. 6 shows a further embodiment of a casting mould (lower half in sectional view). Here the casting mould 2b is shown connected to one closing flange 21b in which the groove 210b can again be seen. The other closing flange 20b with the respective groove 200b is, for the manufacture of a casting 5b, connected to the mould 2b in the same manner as described hereinbefore. In this case too, several mutually concentric grooves can again be provided in the flanges 20b and 21b if a casting having several embedded mesh fabrics is to be manufactured.

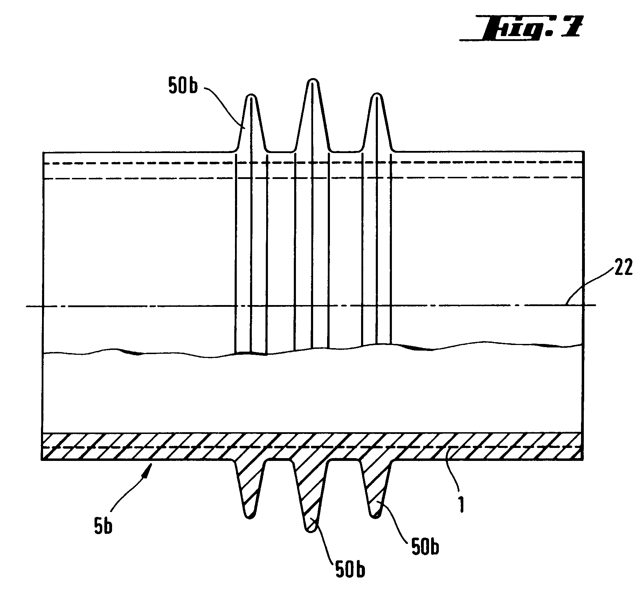

A casting 5b having exactly one embedded mesh fabric 1 is shown in Fig. 7 (lower half in sectional view). Such a casting 5b can be manufactured by means of the casting mould 2b shown in Fig. 6 in accordance with the process described with reference to Fig. 1, Fig. 2 and Fig. 3. The casting 5b has "umbrellas" 50b on its outer face. Such "umbrellas" 50b substantially increase, for example, the tracking path for drops of moisture, which additionally impedes the occurrence of short circuits and tracking over the outer face. Purely for the sake of completeness, it may be mentioned here that the shape of the casting, especially the shape of the outer face, can of course also be varied by shaping the mould in an appropriate manner. For example, umbrellas may be provided along the entire length of the outer face in order further to impede the occurrence of short circuits or tracking.

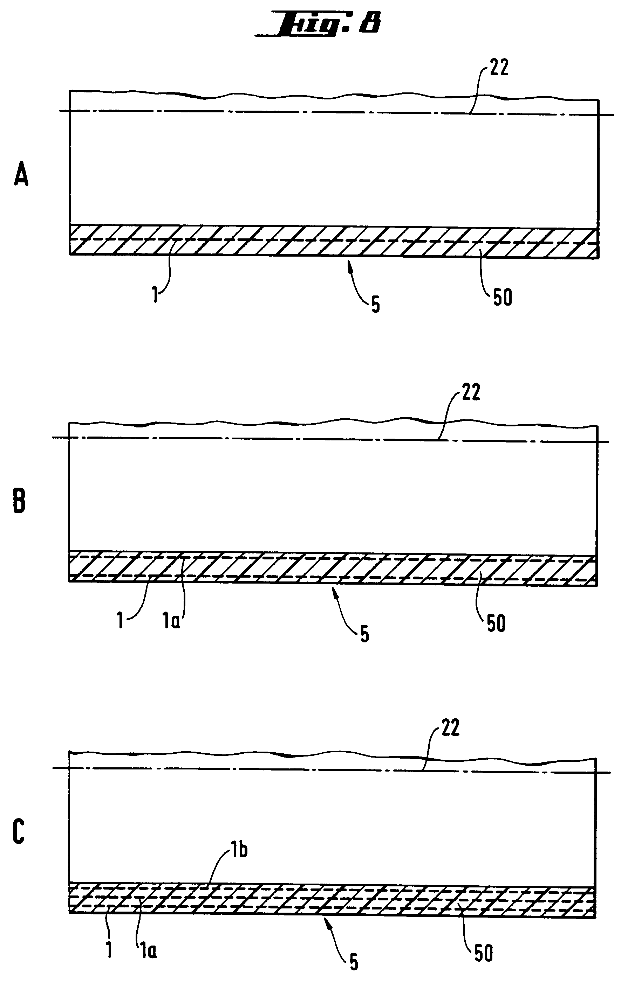

Finally, Fig. 8 shows the embodiments already discussed above for castings having more than one embedded mesh fabric (representations A,B,C). However, only one cut-out portion of a casting having one embedded mesh fabric, one cut-out portion of a casting having two embedded mesh fabrics 1 and 1a, and one cut-out portion of a casting having three embedded mesh fabrics 1, 1a and 1b are shown. Depending on the particular use and the type of mechanical stress, an embodiment having more than one embedded mesh fabric can withstand a greater mechanical stress without the casting becoming defective.

The mesh fabric 1 preferably exhibits a degree of resilience that is lower than or approximately equal to that of the casting 5. The "resilience" of the mesh fabric means the structural resilience, that is to say, the resilience that is governed by the structure of the mesh fabric. The mesh fabric must of course also have a certain inherent rigidity so that it does not collapse when it is being shaped to form a hollow-cylindrical body. The use of such a mesh fabric 1 embedded in the casting 5 means that that casting 5 will only crack if it becomes defective and burst pieces will not be thrown outwards, whereby safety is clearly enhanced. That is of considerable advantage especially when the casting 5 is used as a SF₆ leading-in insulator in high-voltage engineering, since a high degree of safety can thus be ensured. In addition, the process for manufacturing such a casting is simple and reliable and thus enables an insulator to be manufactured that, on the one hand, exhibits a high degree of weathering resistance and a high degree of creep resistance and, on the other hand, if it becomes defective, exhibits a favourable bursting behaviour. In an especially preferred manner, the mesh fabric 1 exhibits a degree of elasticity that is approximately as great as that of the casting 5. The bursting behaviour of the casting 5 is thereby improved even further.

The mesh fabric 1 may be, for example, a polyester fabric, specifically a Diolen fibre fabric. Because the fabric is inserted into a mould 2 that, before the introduction of the casting material 50, is heated to a temperature above the gelling temperature of the casting material 50, the mesh fabric 1 exhibits a certain temperature resistance so that its structure is maintained. In order to ensure that temperature resistance in all cases, before introduction into the casting mould 2 the mesh fabric 1 is preferably impregnated with a laminating resin that is resistant at temperatures above the temperature of the casting mould 2. The application of the laminating resin may be effected, for example, as long as the mesh fabric 1 is still wound on the winding body 10 (Fig. 1). A substance mixture that comprises an epoxy resin, a hardener and a (reaction) accelerator may be used as the laminating resin. A liquid epoxy resin of bisphenol A may be used as the epoxy resin, methyl-tetrahydrophthalic acid anhydride may be used as the hardener and 1-methyl-imidazole may be used as the accelerator in a ratio by weight of approximately 100 parts epoxy resin : 90 parts hardener: 1 part accelerator.

A substance mixture that comprises an epoxy resin, a hardener, an accelerator, a filler and a thixotropic agent may be used as the casting material. Hexahydrophthalic acid diglycidyl ester may be used as the epoxy resin, hexahydrophthalic acid anhydride may be used as the hardener, a mixture of 90 parts by weight of a solution of 3680 parts of sodium methanolate in 8600 parts of methanol and 87 720 parts of polypropylene glycol and 10 parts by weight of 1-methyl-imidazole may be used as the accelerator, a silanised quartz powder, such as the reaction product of trimethoxy-3-(oxiranylmethoxy)propyl-silane and quartz, may be used as the filler, and silicon dioxide in the form of Aerosil® 200 may be used as the thixotropic agent in a ratio by weight of approximately 100 parts epoxy resin: 90 parts hardener: 2.4 parts accelerator: 370 parts silanised quartz powder: 1.5 parts thixotropic agent.

In a practical example of implementation, by proceeding in that manner and using the substances described, castings of the type described with reference to Fig. 7 can be manufactured. The length of such a casting 5b may be, for example, approximately 300 mm, the outside diameter (viewed without the umbrellas) approximately 170 mm and the diameter of the mesh fabric 1 approximately 163 mm; the wall thickness of the casting (again viewed without umbrellas) may be approximately 7.5 mm. The mesh size of the mesh fabric 1 may be approximately 18 mm. When the casting material is introduced into the casting mould 2, the temperature of the above-mentioned casting material may be approximately from 70°C to 80°C. The temperature of the mould 2 with the already inserted mesh fabric 1 may be from 110°C to 130°C. The mould is rotated by the drive device at a rate of approximately 250 revolutions per minute over a period of approximately from 15 to 40 minutes. During that period, therefore, the casting is cast (centrifuged) and the material gelled. The casting is then removed from the mould and cured in an oven for a period of approximately 10 hours so that the mould is in the meantime available for the manufacture of other castings. Such a casting exhibits a very favourable bursting behaviour at a bursting pressure of 40 000 hPa and with the use of nitrogen as the gas.

As a result of the invention, therefore, the bursting behaviour of such a casting is such that, if the casting becomes defective, it will only crack, and burst pieces will not be thrown outwards, whereby safety is clearly enhanced. The manufacturing process is simple and reliable and enables an insulator to be manufactured that exhibits a high degree of weathering resistance and a high degree of creep resistance and that, on the other hand, if it becomes defective, exhibits a bursting behaviour that ensures a high degree of safety, especially when the casting is used as a SF₆ leading-in insulator in high-voltage engineering.

## Claims

1. A process for the manufacture of a substantially hollow-cylindrical casting (5), especially a leading-in insulator for conductors under high voltage, in which process a more or less liquid casting material (50) is introduced into a substantially hollow-cylindrical casting mould (2) that is driven in rotation and that is heated, before the introduction of the casting material, in which process the casting mould (2) filled with casting material (50) is driven in rotation until a casting (5) that is substantially set solid has been formed, and in which process the casting so formed is then removed from the casting mould, wherein prior to introducing the casting material into the casting mould at least one substantially hollow-cylindrical mesh fabric (1, 1a, 1b) is introduced into the casting mould (2) concentrically to the axis of rotation thereof, characterized in that the substantially hollow-cylindrical mesh fabric (1, 1a, 1b) exhibits a degree of resilience that is lower than or approximately equal to that of the casting (5), and that the temperature to which the casting mould (2) is heated is above the gelling temperature of the casting material.

2. A process according to claim 1, wherein a fabric exhibiting approximately the same degree of resilience as does the casting is introduced as the mesh fabric into the casting mould.

3. A process according to claim 1 or 2, wherein at least two mesh fabrics (1, 1a) having different diameters are introduced into the casting mould (2) concentrically to the axis of rotation thereof before the casting material (50) is introduce

4. A process according to any one of claims 1 to 3, wherein a polyester fabric is used as the mesh fabric.

5. A process according to claim 4, wherein the polyester fabric is impregnated with a laminating resin before being introduced into the casting mould

6. A process according to claim 5, wherein a substance mixture that comprises an epoxy resin, a hardener and an accelerator is used as the laminating resin.

7. A process according to claim 6, wherein an epoxy resin of bisphenol A is used as the epoxy resin, methyl-tetrahydrophthalic acid anhydride is used as the hardener and 1-methyl-imidazole is used as the accelerator in a ratio by weight of approximately 100 parts epoxy resin : 90 parts hardener: 1 part accelerator.

8. A process according to any one of claims 1 to 7, wherein a substance mixture that comprises an epoxy resin, a hardener, an accelerator, a filler and a thixotropic agent is used as the casting material.

9. A process according to claim 8, wherein hexahydrophthalic acid diglycidyl ester is used as the epoxy resin, hexahydrophthalic acid anhydride is used as the hardener, a mixture of 90 parts by weight of a solution of 3680 parts of sodium methanolate in 8600 parts of methanol and 87 720 parts of polypropylene glycol and 10 parts by weight of 1-methylimidazole is used as the accelerator, a silanised quartz powder, such as the reaction product of trimethoxy-3-(oxiranylmethoxy)propyl-silane and quartz, is used as the filler, and silicon dioxide in the form of Aerosil® 200 is used as the thixotropic agent in a ratio by weight of approximately 100 parts epoxy resin: 90 parts hardener: 2.4 parts accelerator : 370 parts silanised quartz powder: 1.5 parts thixotropic agent.

10. A substantially hollow-cylindrical casting (5, 5a, 5b), especially a leading-in insulator for a conductor under high voltage, wherein at least one substantially hollow-cylindrical mesh fabric (1, 1a, 1b) is embedded in the casting (5, 5a, 5b) concentrically to the axis of the cylinder, characterized in that the at least one mesh fabric (1, 1a, 1b) exhibits a degree of resilience that is lower than or approximately equal to that of the castings (5, 5a, 5b).

11. A casting according to claim 10, wherein the mesh fabric exhibits approximately the same degree of resilience as the casting.

12. A casting according to claim 11, wherein at least two mesh fabrics (1, 1a) having different diameters are embedded in the casting (5) concentrically to the axis of the cylinder.

13. A casting according to any one of claims 10 to 12, wherein the mesh fabric is a polyester fabric.

14. A casting according to claim 13, wherein the polyester fabric is impregnated with a laminating resin.

15. A casting according to claim 14, wherein the laminating resin is a substance mixture that comprises an epoxy resin, a hardener and an accelerator.

16. A casting according to claim 15, wherein the epoxy resin is a liquid epoxy resin of bisphenol A, the hardener is methyl-tetrathydrophthalic acid anhydride, and the accelerator is 1-methyl-imidazole in a ratio by weight of approximately 100 parts epoxy resin : 90 parts hardener : 1 part accelerator.

17. A casting according to any one of claims 10 to 16, wherein the casting material is a substance mixture that comprises an epoxy resin, a hardener, an accelerator, a filler and a thixotropic agent.

18. A casting according to claim 17, wherein the epoxy resin is hexahydrophthalic acid diglycidyl ester, the hardener is hexahydrophthalic acid anhydride, the accelerator is a mixture of 90 parts by weight of a solution of 3680 parts of sodium methanolate in 8600 parts of methanol and 87 720 parts of polypropylene glycol and 10 parts by weight of 1-methyl-imidazole, the filler is a silanised quartz powder, such as the reaction product of trimethoxy-3-(oxiranylmethoxy)propyl-silane and quartz, and the thixotropic agent is silicon dioxide in the form of Aerosil® 200 in a ratio by weight of approximately 100 parts epoxy resin : 90 parts hardener : 2.4 parts accelerator : 370 parts filler : 1.5 parts thixotropic agent.

## Patentansprüche

1. Verfahren zur Herstellung eines im wesentlichen hohlzylinderförmigen Gießlings (5), insbesondere eines Durchführungsisolators für unter Hochspannung stehende Leiter, bei welchem Verfahren eine mehr oder weniger flüssige Gießmasse (50) in eine rotierend angetriebene im wesentlichen hohlzylindrische Gießform (2) eingebracht wird, die durch einen Antrieb in Drehung versetzt bzw. rotierend angetrieben wird und die vor dem Einbringen der Gießmasse erhitzt wird, bei welchem Verfahren die mit Gießmasse (50) befüllte Gießform (2) bis zur Bildung eine im wesentlichen (form-)festen Gießlings (5) rotierend angetrieben wird, und bei welchem Verfahren der so gebildete Gießling anschließend aus der Gießform entnommen wird, wobei vor dem Einbringen der Gießmasse in die Gießform wenigstens ein im wesentlichen hohlzylindrisches Gittergewebe (1, 1a, 1b) konzentrisch zu ihrer Rotationsachse eingebracht wird, dadurch gekennzeichnet, daß das im wesentlichen hohlzylinderförmige Gittergewebe (1, 1a, 1b) einen Elastizitätsgrad aufweist, der geringer ist, als oder im wesentlichen gleich ist, wie jener des Gießlings (5), und daß die Temperatur, auf die die Gießform (2) erhitzt wird, oberhalb der Geliertemperatur der Gießmasse bzw. des Gießmaterials liegt.

2. Verfahren nach einem der Ansprüche 1, bei welchem ein Gewebe mit einem geringeren oder etwa gleich großen Grad an Elastizität wie der Gießling in die Gießform (2) als Gittergewebe eingebracht wird.

3. Verfahren nach Anspruch 1 oder 2, bei welchem vor dem Einbringen der Gießmasse (50) mindestens zwei Gittergewebe (1, 1a) mit unterschiedlichem Durchmesser konzentrisch zur Rotationsachse der Gießform (2) in diese eingebracht werden.

4. Verfahren nach einem der Ansprüche 1 bis 3, bei welchem als Gittergewebe ein Polyestergewebe verwendet wird.

5. Verfahren nach Anspruch 4, bei welchem das Polyestergewebe vor dem Einbringen in die Gießform mit Hilfe eines Laminierharzes imprägniert wird.

6. Verfahren nach Anspruch 5, bei welchem als Laminierharz ein Stoffgemisch verwendet wird, welches ein Epoxyharz, einen Härter und einen Beschleuniger umfaßt.

7. Verfahren nach Anspruch 6, bei welchem als Epoxyharz Bisphenol-A Epoxyharz, als Härter Methyl-Tetrahydrophthalsäureanhydrid und als Beschleuniger 1-Methyl-Imidazol in einem Gewichtsverhältnis von etwa 100 Teilen Epoxyharz:90 Teilen Härter: 1 Teil Beschleuniger verwendet wird.

8. Verfahren nach einem der Ansprüche 1 bis 7, bei welchem als Gießmasse ein Stoffgemisch verwendet wird, welches ein Epoxyharz, einen Härter, einen Beschleuniger, einen Füllstoff und ein Thixotropiermittel, umfaßt.

9. Verfahren nach Anspruch 8, bei welchem als Epoxyharz Hexahydrophthalsäuredi` glycidylester, als Härter Hexahydrophthalsäureanhydrid, als Beschleuniger ein Gemisch aus 90 Gewichtsteilen einer Lesung von 3.680 Teilen Natriummethanolat in 8.600 Teilen Methanol und 87.720 Teilen Polypropylenglykol und 10 Gewichtsteilen 1-Methyl-Imidazol, als Füllstoff ein silanisiertes Qartzmehl wie das Reaktionsprodukt von Trimethoxy-3-(Oxiranylmethoxy)Propyl-Silan mit Quarz und als Thixotropiermittel Siliziumdioxid in Form von Aerosil® 200 in einem Gewichtsverhälmis von etwa 100 Teilen Epoxyharz:90 Teilen Härter:2,4 Teilen Beschieuniger:370 Teilen silanisiertes Quarzmehl:1,5 Teilen Thixotropiermittel verwendet wird.

10. Im wesentlichen hohlzylinderförmiger Gießling (5, 5a, 5b), insbesondere ein Durchführungsisolator für einen unter Hochspannung stehenden Leiter, bei welchem wenigstens ein im wesentlichen hohlzylinderförmiges Gittergewebe (1, 1a, 1b) in dem Gießling (5, 5a, 5b) konzentrisch zur der Achse des Zylinders eingebettet ist, dadurch gekennzeichnet, daß das wenigstens eine Gittergewebe (1, 1a, 1b) einen Elastizitätsgrad aufweist, der geringer ist, als oder in etwa gleich ist, wie derjenige des Gießlings (5, 5a, 5b).

11. Gießling nach Anspruch 10, bei welchem das Gittergewebe eine gleich große Elastizität aufweist wie der Gießling (5).

12. Gießling nach Anspruch 11, dadurch gekennzeichnet, daß mindestens zwei Gittergewebe (1, 1a) mit unterschiedlichem Durchmesser konzentrisch zur Zylinderachse in den Gießling (5) eingebettet sind.

13. Gießling nach einem der Ansprüche 10 bis 12, bei welchem das Gittergewebe ein Polyestergewebe ist.

14. Gießling nach Anspruch 13, bei welchem das Polyestergewebe mit einem Laminierharz Imprägniert ist.

15. Gießling nach Anspruch 14, bei welchem das Laminierharz ein Stoffgemisch ist, welches ein Epoxyharz, einen Härter und einen Beschleuniger umfaßt.

16. Gießling nach Anspruch 15, bei welchem das Epoxyharz ein flüssiges Bisphenol-A Epoxyharz, der Härter Methyl-Tetrahydrophthalsäureanhydrid und der Beschieuniger 1-Methyl-Imidazol in einem Gewichtsverhältnis von etwa 100 Teilen Epoxyharz:90 Teilen Härter: 1 Teil Beschleuniger ist.

17. Gießling nach einem der Ansprüche 10 bis 16, bei welchem die Gießmasse ein Stoffgemisch ist, welches ein Epoxyharz, einen Härter, einen Beschleuniger, einen Füllstoff und ein Thixotropiermittel umfaßt.

18. Gießling nach Anspruch 17, bei welchem das Epoxyharz Hexahydrophthalsäurediglycidylester, der Härter Hexahydrophthalsäureanhydrid, der Beschleuniger ein Gemisch aus 90 Gewichtsteilen einer Lösung von 3.680 Teilen Natriummethanolat in 8.600 Teilen Methanol und 87.720 Teilen Polypropylenglykol und 10 Gewichtsteilen 1-Methyl-Imidazol, der Füllstoff ein silatusiertes Quarzmehl wie das Reaktionsprodukt von Trimethoxy-3-(Oxiranylmethoxy)Propyl-Silan mit Quarz und das Thixotropiermittel Siliziumdioxid in Form von Aerosil® 200 in einem Gewichtsverhältnis von etwa 100 Teilen Epoxyharz:90 Teilen Härter:2,4 Teilen Beschleuniger:370 Teilen Füllstoff:1,5 Teilen Thixotropiermittel ist.

## Revendications

1. Procédé de fabrication d'une pièce moulée pratiquement cylindrique creuse (5), surtout d'un isolateur de traversée, destinée à des conducteurs à haute tension, dans lequel un matériau (50) de coulée qui est plus ou moins liquide est introduit dans un moule pratiquement cylindrique creux (2) de coulée qui est entraîné en rotation et qui est chauffé, avant l'introduction du matériau de coulée, dans lequel le moule de coulée (2) rempli du matériau de coulée (50) est entraîné en rotation jusqu'à ce qu'une pièce moulée (5), qui a pratiquement durci à l'état solide, se soit formée, et dans lequel la pièce moulée ainsi formée est alors retirée du moule de coulée, dans lequel, avant l'introduction du matériau de coulée dans le moule de coulée, au moins une étoffe de grille pratiquement cylindrique creuse (1, 1a, 1b) est introduite dans le moule de coulée (2) concentriquement à l'axe de rotation de celui-ci, caractérisé en ce que l'étoffe de grille pratiquement cylindrique creuse (1, 1a, 1b) a un degré d'élasticité inférieur ou approximativement égal à celui de la pièce moulée (5), et en ce que la température à laquelle le moule de coulée (2) est chauffé est supérieure à la température de gélification du matériau de coulée.

2. Procédé selon la revendication 1, dans lequel une étoffe ayant approximativement le même degré d'élasticité que la pièce moulée est introduite comme étoffe de grille dans le moule de coulée.

3. Procédé selon la revendication 1 ou 2, dans lequel deux étoffes de grille au moins (1, 1a) ayant des diamètres différents sont introduites dans le moule de coulée (2) concentriquement à l'axe de rotation de celui-ci avant l'introduction du matériau de coulée (50).

4. Procédé selon l'une quelconque des revendications 1 à 3, dans lequel une étoffe de polyester est utilisée comme étoffe de grille.

5. Procédé selon la revendication 4, dans lequel l'étoffe de polyester est imprégnée d'une résine de stratification avant introduction dans le moule de coulée.

6. Procédé selon la revendication 5, dans lequel un mélange qui contient une résine époxyde, un durcisseur et un accélérateur est utilisé comme résine de stratification.

7. Procédé selon la revendication 6, dans lequel une résine époxyde de bisphénol A est utilisée comme résine époxyde, un anhydride d'acide méthyl-tétrahydrophtalique est utilisé comme durcisseur, et du 1-méthylimidazole est utilisé comme accélérateur dans un rapport pondéral d'environ 100 parties de résine époxyde pour 90 parties de durcisseur et 1 partie d'accélérateur.

8. Procédé selon l'une quelconque des revendications 1 à 7, dans lequel un mélange qui contient une résine époxyde, un durcisseur, un accélérateur, une charge et un agent thixotrope est utilisé pour le matériau de coulée.

9. Procédé selon la revendication 8, dans lequel un ester diglycidylique d'acide hexahydrophtalique est utilisé comme résine époxyde, un anhydride d'acide hexahydrophtalique est utilisé comme durcisseur, un mélange de 90 parties en poids d'une solution de 3 680 parties de méthanolate de sodium dans 8 600 parties de méthanol et 87 720 parties de polypropylèneglycol et 10 parties en poids de 1-méthylimidazole est utilisé comme accélérateur, une poudre de quartz silanisé, telle que le produit de la réaction de triméthoxy3-(oxiranylméthoxy)propylsilane et de quartz, est utilisée comme charge, et du bioxyde de silicium sous forme "Aerosil 200" est utilisé comme agent thixotrope, dans un rapport pondéral d'environ 100 parties de résine époxyde pour 90 parties de durcisseur, 2,4 parties d'accélérateur, 370 parties de poudre de quartz silanisé et 1,5 partie d'agent thixotrope.

10. Pièce moulée pratiquement cylindrique creuse (5, 5a, 5b), notamment un isolateur de traversée destiné à un conducteur à haute tension, dans laquelle au moins une étoffe de grille de forme pratiquement cylindrique creuse (1, 1a, 1b) est enrobée dans la pièce moulée (5, 5a, 5b) concentriquement à l'axe du cylindre, caractérisée en ce que l'étoffe de grille au moins (1, 1a, 1b) présente un degré d'élasticité qui est inférieur ou approximativement égal à celui de la pièce moulée (5, 5a, 5b)

11. Pièce moulée selon la revendication 10, dans laquelle l'étoffe de grille a approximativement le même degré d'élasticité que la pièce moulée.

12. Pièce moulée selon la revendication 11, dans laquelle deux étoffes de grille au moins (1, 1a) ayant des diamètres différents sont enrobées dans la pièce moulée (5) concentriquement à l'axe du cylindre.

13. Pièce moulée selon l'une quelconque des revendications 10 à 12, dans laquelle l'étoffe de grille est une étoffe de polyester.

14. Pièce moulée selon la revendication 13, dans laquelle l'étoffe de polyester est imprégnée d'une résine de stratification.

15. Pièce moulée selon la revendication 14, dans laquelle la résine de stratification est un mélange qui contient une résine époxyde, un durcisseur et un accélérateur.

16. Pièce moulée selon la revendication 15, dans laquelle la résine époxyde est une résine époxyde liquide de bisphénol A, le durcisseur est l'anhydride d'acide méthyltétrahydrophtalique, et l'accélérateur est du 1-méthylimidazole, dans un rapport pondéral d'environ 100 parties de résine époxyde pour 90 parties de durcisseur et 1 partie d'accélérateur.

17. Pièce moulée selon l'une quelconque des revendications 10 à 16, dans laquelle le matériau de coulée est un mélange qui contient une résine époxyde, un durcisseur, un accélérateur, une charge et un agent thixotrope.

18. Pièce moulée selon la revendication 17, dans laquelle la résine époxyde est un ester diglycidylique d'acide hexahydropthalique, le durcisseur est l'anhydride d'acide hexahydrophtalique, l'accélérateur est un mélange de 90 parties en poids d'une solution de 3 680 parties de méthanolate de sodium dans 8 600 parties de méthanol et 87 720 parties de propylèneglycol et 10 parties en poids de 1-méthylimidazole, la charge est une poudre de quartz silanisé, telle que le produit de la réaction de triméthoxy-3-(oxiranylméthoxy)propylsilane et de quartz, et l'agent thixotrope est du bioxyde de silicium sous forme "Aerosil 200", dans un rapport pondéral d'environ 100 parties de résine époxyde pour 90 parties de durcisseur, 2,4 parties d'accélérateur, 370 parties de charge et 1,5 partie d'agent thixotrope.
